# EUROPÄISCHE PATENTANMELDUNG

(11) **EP 4 461 120 A1**
(43) Veröffentlichungstag der Anmeldung: **13.11.2024**
(21) Anmeldenummer: 24161930.3
(22) Anmeldetag: 07.03.2024
(51) Int. Cl.: A01D 43/08, A01D 75/18, G01V 3/08

(54) **FELDHÄCKSLER SOWIE VERFAHREN ZUR DETEKTION VON METALLISCHEN FREMDKÖRPERN**

(30) Priorität: 11.05.2023 DE 102023112484
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Klein-Helmkamp, Marwin, 49565 Bramsche (DE); Cord-Kruse, Christian, 48231 Warendorf (DE); Goeres, Thomas, 33428 Harsewinkel (DE); Frye, Simon, 88263 Horgenzell (DE)
(74) Vertreter: CLAAS Gruppe

(57) **Zusammenfassung**

Die vorliegende Anmeldung betrifft einen Feldhäcksler (1) zur Verarbeitung eines Erntegutstroms, mit einem Häckselwerk (2), wobei der Erntegutstrom dem Häckselwerk (2) über mindestens eine Einzugswalze (5) zuführbar ist, wobei in einem Materialzuströmbereich (6) unmittelbar stromauf des Häckselwerks mindestens eine Metalldetektionseinrichtung zur Detektion von Fremdkörpern in dem Erntegutstrom vorgesehen ist, wobei die Metalldetektionseinrichtung dazu geeignet ist, eine aufgrund des Vorliegens der metallischen Fremdkörper hervorgerufene Änderung einer magnetischen Messgröße eines ersten Magnetfelds (7) im Bereich des Materialzuströmbereichs (6) zu messen. Um die Gefahr einer Aufnahme von metallischen Fremdkörpern zu minimieren, ist mindestens ein Magnetisierungselement (8) vorgesehen, wobei dieses zumindest zeitweise ein zweites Magnetfeld (9) erzeugt und mindestens ein Bauteil (10) des Feldhäckslers (1) im Bereich des Materialzuströmbereichs (6) entlang einer Magnetisierungsrichtung (11) magnetisiert, sodass eine erste vektorielle Komponente der Magnetisierungsrichtung (11) orthogonal zu dem ersten Magnetfeld (7) ausgerichtet ist.

## Beschreibung

Die vorliegende Anmeldung betrifft einen Feldhäcksler gemäß dem Oberbegriff von Anspruch 1. Ein derartiger Feldhäcksler wird typischerweise zur Aufnahme, Zerkleinerung und Verladung von Erntegut wie Gras, Luzerne oder Mais genutzt. Des Weiteren betrifft die vorliegende Anmeldung ein Verfahren zur Detektion von metallischen Fremdkörpern in einem Materialzuströmbereich eines Feldhäckslers gemäß dem Oberbegriff von Anspruch 12.

Der Feldhäcksler umfasst mindestens ein Häckselwerk. Das Häckselwerk ist mit mindestens einer Messertrommel ausgestattet, welche wiederum mindestens ein Häckselmesser und mindestens eine Gegenschneide aufweist. Häckselmesser und Gegenschneide wirken dabei derart miteinander zusammen, dass ein mittels des Feldhäckslers zu bearbeitendes Erntegut zerkleinerbar ist. Weiterhin umfasst der Feldhäcksler mindestens eine Einzugswalze zur Zuführung eines Erntegutstroms zum Häckselwerk. Von der Einzugswalze bis zu der Stelle, an der das Häckselmesser mit der Gegenschneide zusammenwirkt, wird ein Materialzuströmbereich definiert.

Problematisch bei bekannten Feldhäckslern hat sich herausgestellt, dass Bauteile des Feldhäckslers in einem Erntebetrieb aufgrund von in dem Erntegut enthaltenen metallischen Fremdkörpern beschädigt werden können. Weiterhin können die metallischen Fremdkörper in das zerkleinerte Erntegut gelangen, was es jedoch in jedem Fall zu vermeiden gilt.

Zur Vermeidung dieser Problematik weisen bekannte Feldhäcksler typischerweise eine Metalldetektionseinrichtung auf, die die metallischen Fremdkörper in dem Erntegutstrom im Materialzuströmbereich detektieren kann, um so eine Beschädigung der Bauteile sowie die Verunreinigung des Ernteguts zu verhindern.

Die Metalldetektionseinrichtung ist dabei typischerweise derart ausgebildet, dass eine aufgrund des Vorliegens der metallischen Fremdkörper hervorgerufene Änderung einer magnetischen Messgröße eines ersten Magnetfelds im Bereich des Materialzuströmbereichs gemessen werden kann. Typischerweise messen bekannte Metalldetektionseinrichtungen dabei eine durch die Fremdkörper hervorgerufene magnetische Induktion.

In aller Regel weist ein Feldhäcksler zwei Einzugswalzen auf, mittels der der Erntegutstrom dem Häckselwerk zugeführt werden. Aufgrund eines im Laufe der Jahre stetig steigenden Durchsatzes des Erntegutstroms im Materialzuströmbereich muss ein Abstand zwischen den Einzugswalzen erhöht werden. In physikalischer Hinsicht führt der vergrößerte Abstand zwischen den Einzugswalzen jedoch zu einer Verringerung der durch die Fremdkörper hervorgerufenen magnetischen Induktion in einem Luftspalt zwischen den Einzugswalzen. Als Folge können die metallischen Fremdkörper nicht zuverlässig detektiert werden.

Zur Lösung dieses Problems ist es bekannt, eine Empfindlichkeit der Metalldetektionseinrichtung zu erhöhen, sodass eine Auslöseschwelle der Metalldetektionseinrichtung verringert wird, was jedoch dazu führt, dass ein Signal-zu-Rauschverhältnis der Metalldetektionseinrichtung ebenfalls verringert wird. Folge ist, dass die Bauteile des Feldhäckslers selbst die Messung der Metalldetektionseinrichtung beeinflussen, sofern die Bauteile zuvor nicht entmagnetisiert wurden.

Um ein Fehlauslösen der Metalldetektionseinrichtung zu verhindern, werden die Bauteile, insbesondere Bauteile, die in unmittelbarer Nähe zu der Metalldetektionseinrichtung angeordnet sind, deshalb in aller Regel zuvor entmagnetisiert. Das vorige Entmagnetisieren der Bauteile ist jedoch sowohl kosten- als auch zeitintensiv. Hinzu kommt, dass das Entmagnetisieren nicht vor einer ungewollten nachträglichen erneuten Magnetisierung der Bauteile schützt, beispielsweise infolge einer Verwendung einer Magnettaschenlampe im Bereich der Bauteile.

Zur Vermeidung der vorbeschriebenen Problematik sind eine Vielzahl von Metalldetektionseinrichtungen aus dem Stand der Technik bekannt. So beschreibt die DE 10 11 6676 B4 eine Metalldetektionseinrichtung, bei der Wandungen und sämtliche Bauteile eines Feldhäckslers aus nicht magnetisierbarem Material ausgebildet sind. Auf diese Weise soll verhindert werden, dass die Bauteile die Metalldetektionseinrichtung beeinflussen können.

Weiterhin offenbart die EP 1762134 B1 eine Metalldetektionseinrichtung, welche ein ferromagnetisches Schirmblech zur Magnetfeldausrichtung und Verringerung von Störquellen aufweist.

Auch die EP 03254253 B1 beschäftigt sich mit der Verringerung von Störquellen. Hierzu ist die Anbringung von Magneten vorgesehen, die ein aus der Metalldetektionseinrichtung stammendes Magnetfeld verstärken und richten, um die Detektion von Metallen in den Wandbereichen eines Einzugs zu verbessern.

Der vorliegenden Anmeldung liegt die Aufgabe zugrunde, einen alternativen Feldhäcksler bereitzustellen, bei dem die Gefahr einer Aufnahme von metallischen Fremdkörpern minimiert ist.

Die zugrunde liegende Aufgabe wird erfindungsgemäß mittels eines Feldhäckslers mit den Merkmalen des Anspruchs 1 gelöst. Vorteilhafte Ausgestaltungen ergeben sich aus den zugehörigen Unteransprüchen.

Der erfindungsgemäße Feldhäcksler ist durch mindestens ein Magnetisierungselement gekennzeichnet. Das Magnetisierungselement erzeugt zumindest zeitweise ein zweites Magnetfeld. Mittels des zweiten Magnetfelds wird mindestens ein Bauteil des Feldhäckslers im Bereich eines Materialzuströmbereichs des Feldhäckslers entlang einer Magnetisierungsrichtung magnetisiert.

Die Magnetisierungsrichtung lässt sich mittels dreier vektorieller Komponenten beschreiben. Dabei ist eine erste vektorielle Komponente orthogonal zu einem ersten Magnetfeld, welches zur Detektion von metallischen Fremdkörpern dient, ausgerichtet.

Im Sinne der vorliegenden Erfindung wird als "orthogonal zu dem ersten Magnetfeld" verstanden, dass die erste vektorielle Komponente orthogonal zu den magnetischen Feldlinien des ersten Magnetfelds ausgerichtet ist. Sofern das erste Magnetfeld beispielsweise von einer stromdurchflossenen Spule erzeugt wird, ist der in einem Innern der Spule annähernd homogen verlaufende Teil der magnetischen Feldlinien gemeint.

Die erfindungsgemäße Erntemaschine hat viele Vorteile. Insbesondere ermöglicht das Magnetisierungselement des Feldhäckslers eine vorbestimmte Magnetisierung mindestens eines Bauteils des Feldhäckslers. Auf diese Weise kann eine Magnetisierungsrichtung, entlang der ein Bauteil magnetisiert werden soll, vorgegeben werden. Eine ungewollte und in zufällige Richtungen weisende Magnetisierung des Bauteils kann mithin verhindert werden. Die durch das Magnetisierungselement vorgegebene Magnetisierungsrichtung ist dabei derart gewählt, dass die erste vektorielle Komponente der Magnetisierungsrichtung orthogonal zu dem ersten Magnetfeld ausgerichtet ist.

Für Bauteile, dessen magnetische Domänen anfänglich zufällige Richtungen aufweisen, kann das Magnetisierungselement dazu beitragen, die Domänen in ihrer Ausrichtung zu verändern. Auf diese Weise kann eine Magnetisierung des Bauteils erzielt werden, bei der die Ausrichtung der magnetischen Domänen im Wesentlichen parallel zu dem äußeren, durch das Magnetisierungselement hervorgerufenen zweiten Magnetfeld gewählt ist. Insbesondere bei Bauteilen mit ferromagnetischen Eigenschaften wird diese Ausrichtung auch nach Wegfall des zweiten Magnetfelds beibehalten. Die Ausrichtung der magnetischen Domänen kann dabei analog durch drei vetorielle Komponenten beschrieben werden.

Zumindest die erste vektorielle Komponente der Magnetisierungsrichtung ist orthogonal zu dem ersten Magnetfeld ausgerichtet. Als Folge ist auch eine vektorielle Komponente der Ausrichtung der magnetischen Domänen des magnetisierten Bauteils orthogonal zu dem ersten Magnetfeld ausgerichtet.

Das Vorhandensein metallischer Fremdkörper in dem Materialzuströmbereich des Feldhäckslers ist infolge einer Änderung einer magnetischen Messgröße des ersten Magnetfelds mittels einer Metalldetektionseinrichtung des Feldhäckslers messbar. Magnetische Störfelder, die beispielsweise infolge einer zufälligen Magnetisierung der Bauteile auftreten, könne diese Messung dabei beeinflussen, sofern die Magnetisierungsrichtung derart ausgerichtet ist, dass sie von der Metalldetektionseinrichtung erfassbar ist. Die orthogonale Ausrichtung der ersten vektoriellen Komponente der Magnetisierungsrichtung verhindert eine Messung dieser vektoriellen Komponente jedoch gerade. Zumindest die erste vektorielle Komponente eines von dem magnetisierten Bauteil erzeugten magnetischen Störfelds ist somit nicht von der Metalldetektionseinrichtung messbar.

Vorteilhafterweise wird somit einerseits sichergestellt, dass das Bauteil entlang einer vorbestimmten Magnetisierungsrichtung magnetisierbar ist. Diese ist dabei andererseits gerade so gewählt, dass ein resultierendes magnetisches Störfeld zumindest nicht vollständig von der Metalldetektionseinrichtung messbar ist. Es kann mithin sichergestellt werden, dass die Magnetisierung des Bauteils zu einer verringerten Beeinflussung der Metalldetektionseinrichtung führt. Vorteilhafterweise ist eine Entmagnetisierung des Bauteils somit nicht nötig. Auch das Anbringen von Schirmblechen oder die Verwendung nicht magnetisierbarer Materialien, wie sie aus dem Stand der Technik bekannt sind, ist nicht nötig.

Es ist gemäß einer vorzugsweisen Ausgestaltung der Erfindung vorgesehen, dass eine zweite vektorielle Komponente und/oder eine dritte vektorielle Komponente der Magnetisierungsrichtung kleiner ist bzw. sind als die erste vektorielle Komponente. So ist beispielsweise vorstellbar, dass die Magnetisierungsrichtung orthogonal zu dem ersten Magnetfeld ausgerichtet ist. In diesem Fall betragen die Werte der zweiten als auch der dritten vektoriellen Komponente im Bezugssystem des ersten Magnetfelds null. Ein entlang der Magnetisierungsrichtung magnetisiertes Bauteil kann die Metalldetektionseinrichtung mithin in keinster Weise beeinflussen.

Ebenso ist jedoch vorstellbar, dass die Magnetisierungsrichtung und das erste Magnetfeld einen Winkel einschließen, sodass die zweite und/oder die dritte vektorielle Komponente einen Wert ungleich null annehmen. In einem solchen Fall kann ein durch die Magnetisierung entlang der zweiten und/oder dritten vektoriellen Komponente erzeugtes magnetisches Störfeld die Metalldetektionseinrichtung beeinflussen. Vorzugsweise ist jedoch vorgesehen, dass die Beträge der zweiten und/oder dritten vektoriellen Komponente des magnetischen Störfelds derart gewählt sind, dass diese unter einem vorgegebenen Grenzwert liegen. Vorzugsweise kann vorgesehen sein, dass der Grenzwert einer magnetischen Feldstärke bei 6 A/cm liegt. Des Weiteren ist die Beeinflussung der Metalldetektionseinrichtung in diesem Fall dennoch verringert.

Gemäß einer vorteilhaften Ausgestaltung der Erfindung ist vorgesehen, dass die Metalldetektionseinrichtung mindestens einen Hall-Sensor und/oder mindestens eine Spule umfasst. Die Verwendung eines Hall-Sensors oder einer Spule hat sich als besonders effizient für die Detektion von metallischen Fremdkörpern erwiesen. Beim Verwenden einer Spule kann vorgesehen sein, dass die Spule von einem Wechselstrom durchflossen wird, der ein magnetisches Wechselfeld hervorruft. Das so erzeugte magnetische Wechselfeld bildet das erste Magnetfeld. Sofern sich ein metallischer Fremdkörper in dem ersten Magnetfeld befindet, wird ein Induktionsstrom induziert, der derart gerichtet ist, dass er die Ursache seiner Entstehung zu hemmen versucht. Dieser Induktionsstrom erzeugt mithin ein Magnetfeld, das dem der Spule entgegengerichtet ist. Das Magnetfeld induziert wiederum eine Spannung in der Spule, die elektronisch ausgewertet werden kann. Bei der zu messenden magnetischen Messgröße kann es sich mithin um eine induzierte Spannung handeln, deren Änderung mittels der Metalldetektionseinrichtung erfassbar ist.

Ebenso ist vorstellbar, zwei Spulen, nämlich eine Senderspule zur Erzeugung des ersten Magnetfelds und eine Empfängerspule zur Erfassung der magnetischen Messgröße, zu verwenden.

Sofern es sich bei der Spule um eine Zylinderspule handelt, kann die Orientierung des ersten Magnetfelds bei bekannter Stromrichtung ermittelt werden. Die Magnetfeldlinien des ersten Magnetfelds verlaufen dabei im Innern der Spule vom Südpol zum Nordpol und erstrecken sich entlang einer Längsachse der Spule. Gemäß einer weiteren vorzugsweisen Ausgestaltung der Erfindung ist dabei vorgesehen, dass die erste vektorielle Komponente der Magnetisierungsrichtung orthogonal zu einer Längsrichtung der Spule ausgerichtet ist. Die entsprechende erste vektorielle Komponente des aufgrund der Magnetisierung eines Bauteils erzeugten magnetischen Störfelds ist mithin nicht messbar und verhindert somit eine Störung der Messung der Metalldetektionseinrichtung.

Beim Verwenden eines Hall-Sensors kann das erste Magnetfeld von dem Erdmagnetfeld gebildet sein, sodass der Hall-Sensor ein vorbestimmtes konstantes Signal liefert. Sofern sich ein metallischer Fremdkörper in dem Materialzuströmbereich befindet, ändert sich das Signal. Bei der magnetischen Messgröße kann es sich um die magnetische Flussdichte handeln, die als elektrische Spannung bestimmt werden kann.

Eine vorteilhafte Ausgestaltung der Erfindung sieht vor, dass die Metalldetektionseinrichtung als erstes Magnetfeld ein von ihr selbst erzeugtes Magnetfeld oder das Erdmagnetfeld nutzt. Die Verwendung eines selbst erzeugten Magnetfelds kann sich - wie vorstehend erläutert - insbesondere bei der Verwendung einer Spule als zweckmäßig erwiesen. Die Verwendung des Erdmagnetfelds hingegen kommt insbesondere bei der Nutzung eines Hall-Sensors als Metalldetektionseinrichtung infrage.

Eine weitere Ausgestaltung der Erfindung sieht vor, dass das Magnetisierungselement mindestens einen Permanentmagneten zur Erzeugung des zweiten Magnetfelds aufweist. Der Permanentmagnet erzeugt dabei ein dauerhaftes Magnetfeld zur Magnetisierung mindestens eines Bauteils. Vorzugsweise ist der Permanentmagnet im Materialzuströmbereich angeordnet.

Eine besonders vorteilhafte Weiterentwicklung des erfindungsgemäßen Feldhäckslers sieht vor, dass das Magnetisierungselement mindestens eine Schneidschärfendetektionseinrichtung zur Erfassung eines Schneidschärfegrads des Häckselwerks aufweist, wobei die Schneidschärfendetektionseinrichtung mittels mindestens einer Magnetanordnung mindestens einen Magnetkreis erregt, wobei der jeweilige Magnetkreis bei einer Drehung der Messertrommel, sobald eines der Häckselmesser die Magnetanordnung passiert, über das jeweilige Häckselmesser geschlossen wird, wobei die Magnetanordnung das zweite Magnetfeld erzeugt.

Für eine mögliche Ausgestaltung der Schneidschärfendetektionseinrichtung, insbesondere der verwendbaren Bauteile, wird auf die europäischen Patentanmeldungen EP 3 363 281 A1 und EP 3 498 080 A1 verwiesen, dessen Inhalt betreffend die Ausgestaltung der Schneidschärfendetektionseinrichtung, dort ebenso bzw. "Erfassungsanordnung" benannt, hiermit durch Verweis vollumfänglich dem Inhalt der vorliegenden Anmeldung hinzugefügt wird.

Demnach kann die Magnetanordnung auch eine magnetische Erregeranordnung und eine damit magnetisch gekoppelte Flussleiteinrichtung aufweisen, wobei die Magnetanordnung eine Polanordnung bereitstellt, die mindestens einen magnetischen Pol mit einer Polfläche zum Ausleiten von Magnetfluss ausbildet, wobei bei der Drehung der Messertrommel zumindest ein Teil der Häckselmesser die Polanordnung passiert, das die Polanordnung jeweils passierende Häckselmesser eine Luftspaltanordnung mit mindestens einem Luftspalt zu der Polanordnung hin ausbildet und dadurch mindestens der von der Erregeranordnung erregte Magnetkreis über das jeweilige Häckselmesser geschlossen wird.

Ferner kann vorgesehen sein, dass zumindest ein Teil des von der magnetischen Erregeranordnung erzeugten Magnetflusses zumindest über einen Längsabschnitt des die Polanordnung passierenden Häckselmessers in dem Häckselmesser längsgeführt ist. Darüber hinaus kann die Magnetanordnung vorzugsweise außerhalb des Materialzuströmbereichs des Häckselwerks positioniert sein.

Es hat sich herausgestellt, dass eine derartige Schneidschärfendetektionseinrichtung ebenfalls eine Magnetisierung mindestens eines Bauteils bewirkt, die derart gerichtet ist, dass eine Beeinflussung der Messung der Metalldetektionseinrichtung weitgehend verhindert ist. Eine magnetische Flussdichte eines entsprechend durch die Magnetisierung hervorgerufenes Störfelds kann dabei überraschenderweise auch außerhalb eines typischen Grenzwerts liegen, der typischerweise nicht ohne Verfälschung der Messung der Metalldetektionseinrichtung überschritten werden kann.

Vorzugsweise kann die Schneidschärfendetektionseinrichtung zumindest ein Häckselmesser des Häckselwerks magnetisieren. Es hat sich herausgestellt, dass insbesondere das Häckselmesser zu einer Verfälschung der Messung der Metalldetektionseinrichtung führt. Weiterhin erfolgt eine Magnetisierung des Schneidmessers bei Verwendung eines Magnetisierungselements in Form einer vorbeschriebenen Schneidschärfendetektionseinrichtung ohnehin. Auf diese Weise muss neben der Schneidschärfendetektionseinrichtung keine weitere Einrichtung zur Magnetisierung des Schneidmessers genutzt werden. Gleichwohl kann auf eine Entmagnetisierung oder andere Maßnahmen, wie sie aus dem Stand der Technik bekannt sind, verzichtet werden, während ein Schneidschärfengrad der Schneidmesser überwacht werden kann.

Ferner ist es besonders vorteilhaft, wenn das Magnetisierungselement die Messertrommel, vorzugsweise inklusive des mindestens einen Häckselmessers, mindestens eine Doppelfeder, mindestens einen Flanschdeckel, mindestens eine Glattwalze und/oder mindestens eine Mutter des Häckselwerks magnetisiert. Die vorgenannten Bauteile befinden sich typischerweise im Materialzuströmbereich und sorgen in aller Regel für eine Beeinflussung der Messung der Metalldetektionseinrichtung, sofern sie nicht zuvor entmagnetisiert worden sind.

Eine weitere vorzugsweise Ausgestaltung der Erfindung sieht vor, dass das Magnetisierungselement ein dauerhaftes zweites Magnetfeld erzeugt. Insbesondere bei Verwendung eines Permanentmagneten als Magnetisierungselement kann ein dauerhaftes zweites Magnetfeld erzeugt werden. Die Verwendung eines dauerhaften zweiten Magnetfelds verhindert dabei vorteilhafterweise auch, dass sich die magnetischen Domänen bei Wegfall des Magnetfelds in ihrer Ausrichtung verändern.

Die eingangs genannte Aufgabe wird ferner mittels eines Verfahrens zur Detektion von metallischen Fremdkörpern in einem Materialzuströmbereich eines Feldhäckslers gemäß Anspruch 12 gelöst. Vorteilhafte Ausgestaltungen des Verfahrens sind Gegenstand des abhängigen Anspruchs.

In einem ersten Schritt des Verfahrens wird eine Änderung einer magnetischen Messgröße eines ersten Magnetfelds mittels einer Metalldetektionseinrichtung gemessen. Hierzu wird eine Metalldetektionseinrichtung verwendet, die in einem Materialzuströmbereich des Feldhäckslers angeordnet ist. Die Änderung der magnetischen Messgröße wird dabei aufgrund des Vorliegens der metallischen Fremdkörper hervorgerufen.

In einem zweiten Schritt des Verfahrens wird zumindest zweitweise ein zweites Magnetfeld erzeugt, welches dazu genutzt wird, mindestens ein Bauteil des Feldhäckslers im Bereich des Zuströmbereichs zu magnetisieren. Das zweite Magnetfeld wird dabei von einem Magnetisierungselement erzeugt und ist entlang einer Magnetisierungsrichtung ausgerichtet. Die Magnetisierungsrichtung ist dabei derart orientiert, dass eine erste vektorielle Komponente der Magnetisierungsrichtung orthogonal zu dem ersten Magnetfeld ausgerichtet ist.

Die in Bezug auf den erfindungsgemäßen Feldhäcksler genannten Vorteile gelten dabei analog für das Verfahren. Insbesondere ermöglicht das Verfahren ein Bauteil eines Feldhäckslers derart zu magnetisieren, dass ein von dem magnetisierten Bauteil erzeugtes magnetisches Störfeld derart gerichtet ist, dass eine Beeinflussung einer Messung der Metalldetektionseinrichtung verringert ist.

Eine vorzugsweise Ausgestaltung der Erfindung sieht ferner vor, dass mindestens ein Bauteil des Feldhäckslers vor der Messung der Änderung der magnetischen Messgröße des ersten Magnetfelds entlang der Magnetisierungsrichtung magnetisiert wird. Vorgesehen sein kann dabei, dass - sofern es sich bei dem Magnetisierungselement um einen Permanentmagneten handelt - eine Magnetisierung des Bauteils automatisch, d.h. ohne händisches Zutun, erfolgt. Für den Fall, dass das Magnetisierungselement in Form einer Schneidschärfendetektionseinrichtung ausgebildet ist, kann vorgesehen sein, dass die Schneidschärfendetektionseinrichtung zeitgleich zur Metalldetektionseinrichtung betrieben wird, sodass das zu magnetisierende Bauteil kontinuierlich magnetisiert wird.

Die Erfindung ist nachstehend anhand eines Ausführungsbeispiels, das in den Figuren dargestellt ist, näher erläutert. Es zeigt:
- Fig. 1:: Einen vertikalen Schnitt durch einen erfindungsgemäßen Feldhäckslers.
- Fig. 2:: Eine perspektivische Ansicht des Feldhäckslers aus Figur 1.

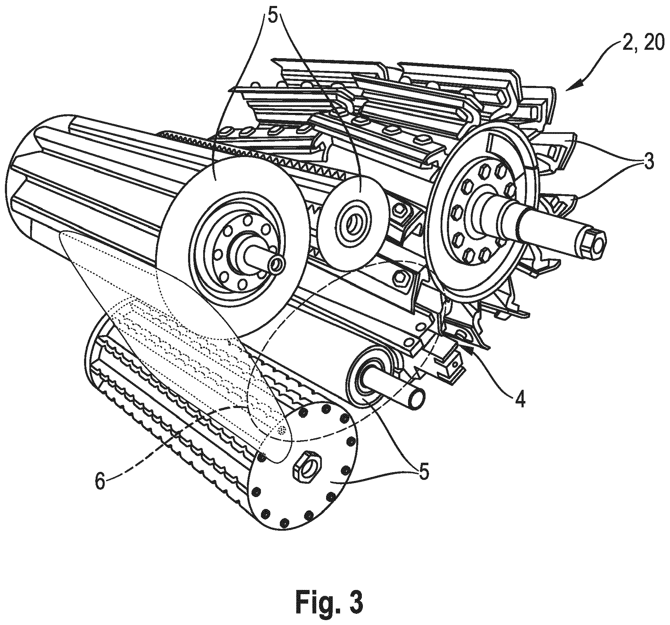

- Fig. 3:: Eine Detailansicht eines Materialzuströmbereichs des Feldhäckslers aus Figur 1.
- Fig. 4:: Eine weitere Detailansicht des Materialzuströmbereichs mit einem Magnetisierungselement.
- Fig. 5:: Einen Schaltplan einer zweiten Ausführung eines Magnetisierungselements.

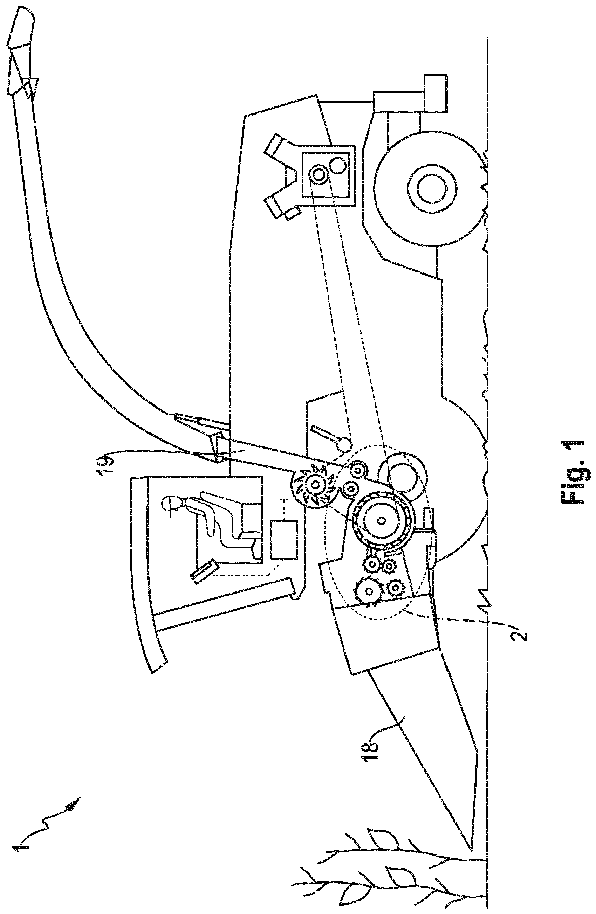

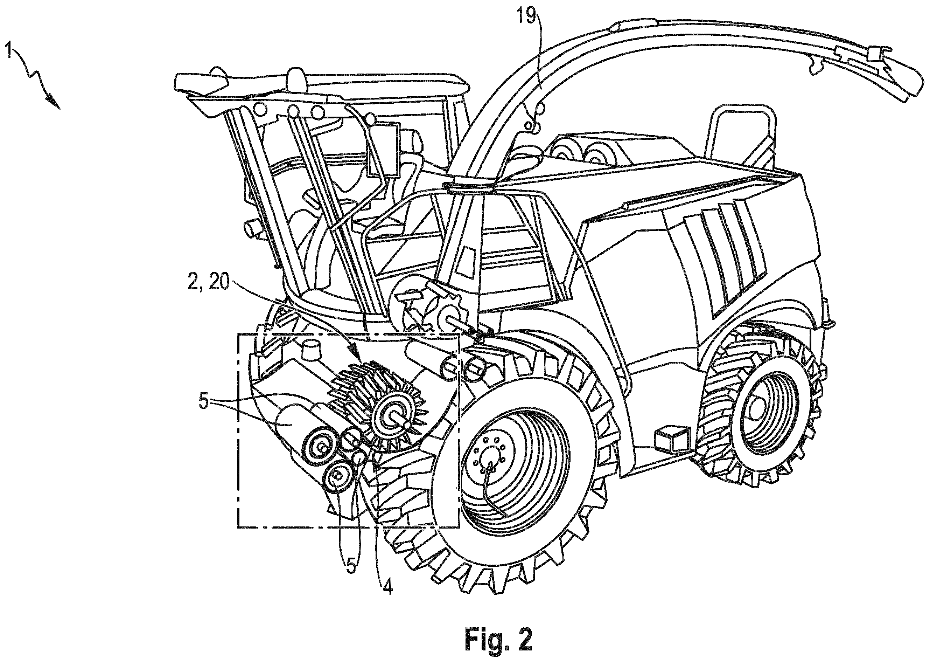

Ein erfindungsgemäßer Feldhäcksler **1** ist in den **Figuren 1** **und** **2** gezeigt. Der Feldhäcksler **1** eignet sich zur Aufnahme und Verarbeitung, insbesondere Zerkleinerung, von auf einem Feld aufstehendem Erntegut.

Der Feldhäcksler **1** weist einen Erntevorsatz sowie eine Vorpresseinheit **18** auf, wobei die Vorpresseinheit **18** als Aufnahmeeinrichtung für das Erntegut fungiert. Zur Aufnahme des Ernteguts weist die Vorpresseinheit **18** des Feldhäckslers **1 1** dabei vier Einzugswalzen **5** auf, die das Erntegut einem Häckselwerk **2** des Feldhäckslers **1** zuführen. Das Erntegut wird dabei von dem Häckselwerk **2** zerhäckselt und anschließend an einen sich an das Häckselwerk **2** anschließenden Auswurfkanal **19** übergeben.

Das Häckselwerk **2** weist eine Messertrommel **20** auf. Die Messertrommel **20** weist wiederum mehrere Häckselmesser **3** sowie eine Gegenschneide **4** auf. Die Häckselmesser **3** wirken mit der Gegenschneide **4** zerkleinernd zusammen.

Von den Einzugswalzen **5** bis zu einer Stelle, an der die Häckselmesser **3** mit der Gegenschneide **4** zusammenwirken, definiert der Erntegutstrom einen Materialzuströmbereich **6.** In dem Materialzuströmbereich **6** ist eine nicht in den Figuren gezeigte Metalldetektionseinrichtung angeordnet. Diese dient dazu, in dem Erntegutstrom enthaltene metallische Fremdkörper zu detektieren.

Die Metalldetektionseinrichtung ist dabei in Form einer Spule ausgebildet. Die Spule wird von einem Strom durchflossen und erzeugt ein erstes Magnetfeld **7,** vorzugsweise ein magnetisches Wechselfeld. Die Detektion der metallischen Fremdkörper erfolgt mittels einer Messung einer Änderung einer magnetischen Messgröße des ersten Magnetfelds **7** im Materialzuströmbereich **6.** Bei der magnetischen Messgröße kann es sich insbesondere um eine induzierte Spannung handeln.

Bei Vorliegen von metallischen Fremdkörpern in dem Materialzuströmbereich **6** wird aufgrund des vorliegenden ersten Magnetfelds **7** ein Induktionsstrom in der Spule erzeugt, welcher wiederum ein Magnetfeld erzeugt, das dem ersten Magnetfeld **7** entgegengerichtet ist. Das aufgrund des Induktionsstroms erzeugte Magnetfeld induziert wiederum eine Spannung in der Spule. Die Änderung der magnetischen Messgröße, nämlich der Spannung, erfolgt mithin dann, wenn sich metallische Fremdkörper in dem Materialzuströmbereich **6** befinden.

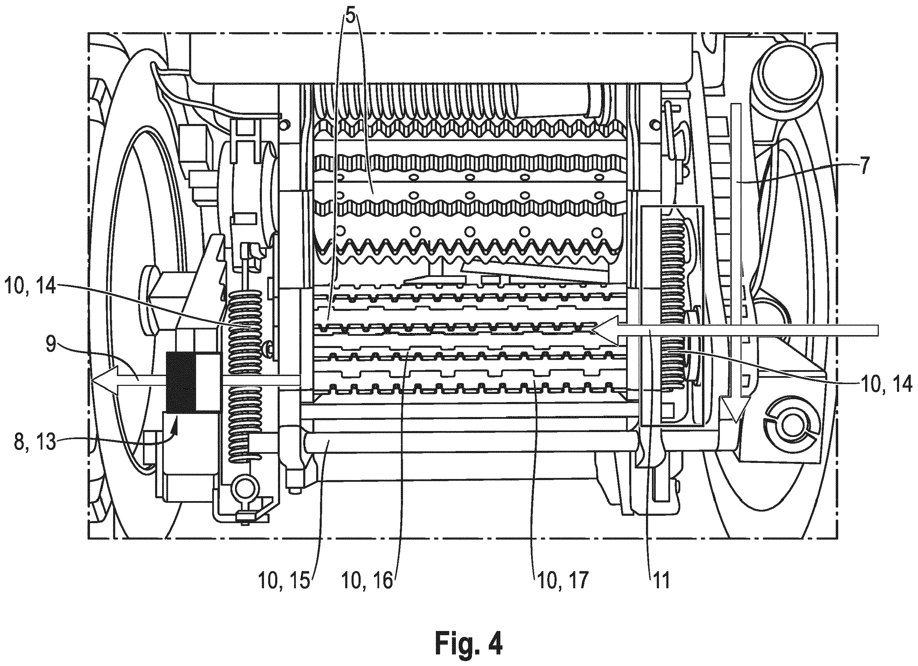

Weiterhin umfasst der Feldhäcksler **1** ein Magnetisierungselement **8,** welches in Form eines Permanentmagneten **13** ausgebildet ist. Das Magnetisierungselement **8** erzeugt ein dauerhaftes zweites Magnetfeld **9.** Das Magnetisierungselement **8** ist im Materialzuströmbereich **6** angeordnet, wie insbesondere aus der **Figur 4** erkennbar ist. Mittels Magnetisierungselements **8** lassen sich die Bauteile **10,** die sich in der Nähe des Materialzuströmbereichs **6** befinden, entlang einer Magnetisierungsrichtung **11** magnetisieren. Die Magnetisierungsrichtung **11** entspricht dabei im Wesentlichen Magnetfeldlinien des zweiten Magnetfelds **9.**

Die zu magnetisierenden Bauteile **10** umfassen die Häckselmesser **3** des Häckselwerks **2** sowie zwei Doppelfedern **14,** zwei Flanschdeckel **15,** die Einzugswalzen **5** sowie entsprechende Muttern **17.**

Das Magnetisierungselement **8** ist dabei derart im Materialzuströmbereich **6** angeordnet, dass die Magnetisierungsrichtung **11,** entlang der die Bauteile **10** magnetisiert werden, derart ausgerichtet ist, dass eine erste vektorielle Komponente der Magnetisierungsrichtung **11** orthogonal zu dem ersten, von der Spule erzeugten Magnetfeld **7** ausgerichtet ist.

Sofern die Bauteile **10** ungeordnete magnetische Domänen aufweisen, werden diese mittels des Magnetisierungselement **8** ausgerichtet. Die Ausrichtung erfolgt dabei derart, dass die magnetischen Domänen sich parallel zur Magnetisierungsrichtung **11** ausrichten. Ein von den Bauteilen **10** aufgrund der Magnetisierung erzeugtes magnetisches Störfeld ist mithin derart ausgerichtet, dass eine erste vektorielle Komponente des magnetischen Störfelds ebenfalls orthogonal zu dem ersten Magnetfeld **7** ausgerichtet ist.

In der in den Figuren gezeigten Ausführung ist die Magnetisierungsrichtung **11** orthogonal zu dem ersten Magnetfeld **7** ausgerichtet. Das erzeugte Störfeld ist mithin nicht von der Metalldetektionseinrichtung messbar. Eine Störung der Messung der Metalldetektionseinrichtung ist mithin ausgeschlossen.

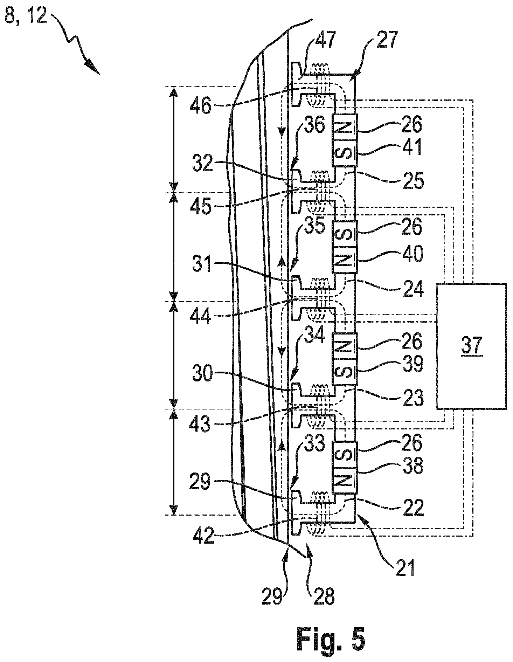

Ein Schaltplan einer zweiten Ausführung eines Magnetisierungselements **8** zur Magnetisierung der Bauteile **10** ist in der **Figur 5** gezeigt. Das Magnetisierungselement **8** ist in Form einer Schneidschärfendetektionseinrichtung **12** ausgebildet.

Die Schneidschärfendetektionseinrichtung **12** umfasst eine Magnetanordnung **21,** die mehrere Magnetkreise **22, 23, 24, 25** erregt, wobei die Magnetkreis **22, 23, 24, 25** jeweils bei einer Drehung der Messertrommel **20,** sobald eines der Häckselmesser **3** die Magnetanordnung **21** passiert, über das jeweilige Häckselmesser **3** geschlossen werden. In diesem Zuge erzeugt die Magnetanordnung **21** das zweite Magnetfeld **9,** das auch zur Magnetisierung der Bauteile **10** genutzt wird.

Hierzu umfasst die Magnetanordnung **21** eine magnetische Erregeranordnung **26** und eine mit der Erregeranordnung **26** magnetisch gekoppelte Flussleiteinrichtung **27.** Weiterhin stellt die Magnetanordnung **21** eine gegenüber der Messertrommel **20** feststehende Polanordnung **28** bereit. Diese bildet entsprechend mehrere magnetische Pol **28, 29, 30, 31, 32** mit einer Polfläche zum Ausleiten von Magnetfluss aus.

Für die Ausgestaltung der Erregeranordnung **26** sind verschiedene vorteilhafte Varianten denkbar. Vorzugsweise weist die Erregeranordnung **26** mehrere Erregermagnete **28, 29, 40, 41** auf, die als Permanentmagnet ausgestaltet sind. Dabei ist jedem Magnetkreis **22, 23, 24, 25** ein Erregermagnet **28, 29, 30, 31** zugeordnet.

Beim Passieren der Magnetanordnung **21** bildet die Polanordnung **28** mit dem passierenden Häckselmesser **3** kurzzeitig eine Luftspaltanordnung mit einem jeweiligen Luftspalt **33, 34, 35, 36** zur Polanordnung **28** hin aus. Darüber hinaus wird jeder von der Erregeranordnung **26** erregte Magnetkreis **22, 23, 24, 25** über das Häckselmesser **3** geschlossen.

Ein resultierender Magnetfluss in dem jeweiligen Magnetkreis **22, 23, 24, 25** hängt bei vorgegebener magnetischer Erregung von einer Geometrie und Breite des jeweiligen Luftspalts **33, 34, 35, 36** ab. Auf diese Weise lässt sich ausgehend von dem Magnetfluss ein Verschleißzustand des Häckselmessers **3** bestimmten. Hierzu weist die Schneidschärfendetektionseinrichtung **12** jeweils eine dem Magnetkreis **22, 23, 24, 25** zugeordnete Messeinheit **42, 43, 44, 45, 46** auf.

Gleichzeitig werden die Bauteile **10** mittels des zweiten Magnetfelds **9** entlang einer vorgegebene Magnetisierungsrichtung **11** magnetisiert, wobei mindestens die erste vektorielle Komponente der Magnetisierungsrichtung **11** orthogonal zu dem ersten Magnetfeld **7** ausgerichtet ist, sodass eine Beeinflussung der Messung der Metalldetektionseinrichtung verringert ist.

### Bezugszeichenliste

- 1: Feldhäcksler
- 2: Häckselwerk
- 3: Häckselmesser
- 4: Gegenschneide
- 5: Einzugswalze
- 6: Materialzuströmbereich
- 7: Erstes Magnetfeld
- 8: Magnetisierungselement
- 9: Zweites Magnetfeld
- 10: Bauteil
- 11: Magnetisierungsrichtung
- 12: Schneidschärfendetektionseinrichtung
- 13: Permanentmagnet
- 14: Doppelfeder
- 15: Flanschdeckel
- 16: Glattwalze
- 17: Mutter
- 18: Vorpresseinheit
- 19: Auswurfkanal
- 20: Messertrommel
- 21: Magnetanordnung
- 22: Magnetkreis
- 23: Magnetkreis
- 24: Magnetkreis
- 25: Magnetkreis
- 26: Magnetische Erregeranordnung
- 27: Flussleiteinrichtung
- 28: Polanordnung
- 29: Pol
- 30: Pol
- 31: Pol
- 32: Pol
- 33: Luftspalt
- 34: Luftspalt
- 35: Luftspalt
- 36: Luftspalt
- 37: Auswerteeinheit
- 38: Erregermagnet
- 39: Erregermagnet
- 40: Erregermagnet
- 41: Erregermagnet
- 42: Messeinheit
- 43: Messeinheit
- 44: Messeinheit
- 45: Messeinheit
- 46: Messeinheit
- 47: Pol

## Patentansprüche

1. Feldhäcksler (1) zur Verarbeitung eines Erntegutstroms, umfassend
- mindestens ein Häckselwerk (2),
- wobei das Häckselwerk (2) mindestens eine Messertrommel (20) mit mindestens einem Häckselmesser (3) sowie mindestens eine Gegenschneide (4) aufweist, die mit dem Häckselmesser (3) zerkleinernd zusammenwirkt,
- wobei der Erntegutstrom dem Häckselwerk (2) über mindestens eine Einzugswalze (5) zuführbar ist,
- wobei der Erntegutstrom von der Einzugswalze (5) bis zu einer Stelle, an der das Häckselmesser (3) mit der Gegenschneide (4) zusammenwirkt, einen Materialzuströmbereich (6) definiert,
- mindestens eine dem Materialzuströmbereich (6) zugeordnete Metalldetektionseinrichtung zur Detektion von metallischen Fremdkörpern in dem Erntegutstrom,
- wobei die Metalldetektionseinrichtung dazu geeignet ist, eine aufgrund des Vorliegens der metallischen Fremdkörper hervorgerufene Änderung einer magnetischen Messgröße eines ersten Magnetfelds (7) im Bereich des Materialzuströmbereichs (6) zu messen,
**gekennzeichnet durch**
- mindestens ein Magnetisierungselement (8),
- wobei das Magnetisierungselement (8) zumindest zeitweise ein zweites Magnetfeld (9) erzeugt und mindestens ein Bauteil (10) des Feldhäckslers (1) im Bereich des Materialzuströmbereichs (6) entlang einer Magnetisierungsrichtung (11) magnetisiert,
- wobei zumindest eine erste vektorielle Komponente der Magnetisierungsrichtung (11) orthogonal zu dem ersten Magnetfeld (7) ausgerichtet ist.

2. Feldhäcksler (1) nach Anspruch 1, **dadurch gekennzeichnet, dass** eine zweite vektorielle Komponente und/oder eine dritte vektorielle Komponente der Magnetisierungsrichtung (11) kleiner ist bzw. sind als die erste vektorielle Komponente.

3. Feldhäcksler (1) nach Anspruch 1 oder 2, **dadurch gekennzeichnet, dass** die Magnetisierungsrichtung (11) orthogonal zum ersten Magnetfeld (7) ausgerichtet ist.

4. Feldhäcksler (1) nach einem der vorhergehenden Ansprüche, **dadurch gekennzeichnet, dass** die Metalldetektionseinrichtung mindestens einen Hall-Sensor und/oder mindestens eine Spule umfasst.

5. Feldhäcksler (1) nach Anspruch 4, **dadurch gekennzeichnet, dass** die erste vektorielle Komponente der Magnetisierungsrichtung (11) orthogonal zu einer Längsrichtung der Spule ausgerichtet ist.

6. Feldhäcksler (1) nach einem der vorhergehenden Ansprüche, **dadurch gekennzeichnet, dass** die Metalldetektionseinrichtung als erstes Magnetfeld (7) ein von ihr selbst erzeugtes Magnetfeld oder das Erdmagnetfeld nutzt.

7. Feldhäcksler (1) nach einem der vorhergehenden Ansprüche, **dadurch gekennzeichnet, dass** das Magnetisierungselement (8) mindestens einen Permanentmagneten (13) zur Erzeugung des zweiten Magnetfelds (9) aufweist.

8. Feldhäcksler (1) nach einem der vorhergehenden Ansprüche, **dadurch gekennzeichnet, dass** das Magnetisierungselement (8) mindestens eine Schneidschärfendetektionseinrichtung (12) zur Erfassung eines Schneidschärfegrads des Häckselwerks aufweist,
- wobei die Schneidschärfendetektionseinrichtung (12) mittels mindestens einer Magnetanordnung (21) mindestens einen Magnetkreis (22, 23, 24, 25) erregt, wobei der jeweilige Magnetkreis (22, 23, 24, 25) bei einer Drehung der Messertrommel (20), sobald eines der Häckselmesser (3) die Magnetanordnung (21) passiert, über das jeweilige Häckselmesser (3) geschlossen wird,
- wobei die Magnetanordnung (21) das zweite Magnetfeld (9) erzeugt.

9. Feldhäcksler (1) nach Anspruch 8, **dadurch gekennzeichnet, dass** die Schneidschärfendetektionseinrichtung (12) zumindest ein Häckselmesser (3) des Häckselwerks (2) magnetisiert.

10. Feldhäcksler (1) nach einem der vorhergehenden Ansprüche, **dadurch gekennzeichnet, dass** das Magnetisierungselement (8) die Messertrommel (20), vorzugsweise inklusive des mindestens einen Häckselmessers (3), mindestens eine Doppelfeder (14), mindestens einen Flanschdeckel (15), mindestens eine Glattwalze (16) und/oder mindestens eine Mutter (17) des Häckselwerks (2) magnetisiert.

11. Feldhäcksler (1) nach einem der vorhergehenden Ansprüche, **dadurch gekennzeichnet, dass** das Magnetisierungselement (8) ein dauerhaftes zweites Magnetfeld (9) erzeugt.

12. Verfahren zur Detektion von metallischen Fremdkörpern in einem Materialzuströmbereich (6) eines Feldhäckslers (1) nach einem der Ansprüche 1 bis 11, **gekennzeichnet durch** die folgenden Verfahrensschritte:
- Messung einer aufgrund des Vorliegens der metallischen Fremdkörper hervorgerufenen Änderung einer magnetischen Messgröße eines ersten Magnetfelds (7) mittels einer dem Materialzuströmbereich (6) zugeordneten Metalldetektionseinrichtung.
- Zumindest zeitweise Erzeugung eines zweiten Magnetfelds (9) und Magnetisierung mindestens eines Bauteils (10) des Feldhäckslers (1) im Bereich des Materialzuströmbereich (6) entlang einer Magnetisierungsrichtung (11) mittels mindestens eines Magnetisierungselements (8), wobei zumindest eine erste vektorielle Komponente der Magnetisierungsrichtung (11) orthogonal zu dem ersten Magnetfeld (7) ausgerichtet ist.

13. Verfahren nach Anspruch 12, **dadurch gekennzeichnet, dass** mindestens ein Bauteil (10) des Feldhäckslers (1) vor der Messung der Änderung der magnetischen Messgröße des ersten Magnetfelds (7) entlang der Magnetisierungsrichtung (11) magnetisiert wird.
